# FASCICULE DE BREVET EUROPEEN

(11) **EP 3 272 202 B1**
(45) Date de publication et mention de la délivrance du brevet: **11.08.2021**
(21) Numéro de dépôt: 17179352.4
(22) Date de dépôt: 03.07.2017
(51) Int. Cl.: A01D 45/06

(54) **ENGIN AGRICOLE AUTOMOTEUR POUR RECOLTER PAR ARRACHAGE DES PLANTES A TIGES FIBREUSES, EN PARTICULIER DES PLANTS DE LIN**
SELBSTFAHRENDE LANDWIRTSCHAFTLICHE MASCHINE ZUM ERNTEN DURCH AUSREISSEN VON PFLANZEN MIT FASERIGEN STIELEN, INSBESONDERE FLACHSPFLANZEN
SELF-PROPELLED AGRICULTURAL MACHINE FOR HARVESTING PLANTS WITH FIBROUS STEMS, IN PARTICULAR FLAX PLANTS

(30) Priorité: 22.07.2016 FR 1657049
(43) Date de publication de la demande: 24.01.2018
(73) Titulaire: Dehondt, Guy, 76170 Auberville La Campagne (FR); Dehondt, Guillaume, 76170 Lillebonne (FR)
(72) Inventeur: Dehondt, Guy, 76170 Auberville La Campagne (FR); Dehondt, Guillaume, 76170 Lillebonne (FR)
(74) Mandataire: Cabinet Netter

(56) Documents cités:
- DE-A1- 19 744 988
- FR-A1- 2 407 660
- FR-A1- 2 653 967
- FR-A1- 2 662 906
- FR-A1- 2 866 517

## Description

La présente invention concerne un engin agricole automoteur pour récolter par arrachage des plantes à tiges fibreuses, en particulier des plants de lin.

Il existe actuellement de nombreux véhicules de ce type utilisés dans les champs pour la récolte. Typiquement, ces engins comportent :
- un châssis monté sur roues pour se déplacer dans le champ,
- une cabine de pilotage,
- un moteur pour l'entraînement des roues et des moyens de récolte et, selon le sens de déplacement de la machine en utilisation,
- des moyens d'arrachage à courroies pour arracher par pincement les tiges des plantes à mesure que la machine agricole avance dans le champ,
- des moyens de convoyage à courroies pour transporter les tiges des plantes arrachées et les faire passer d'une position sensiblement verticale d'arrachage à une position sensiblement horizontale de transport par pivotement d'environ 90°, lesdits moyens de convoyage étant inclinés vers le haut et supportant les moyens d'arrachage,
- des moyens d'étalage comportant des courroies et une table d'étalage pour déposer les tiges des plantes sur le sol derrière l'engin agricole, une zone de reprise formant un vide étant définie entre la fin des moyens de convoyage et le début des moyens d'étalage.

Cependant, ces engins ne donnent pas entièrement satisfaction. En effet, un bourrage de la zone de reprise avec les tiges des plantes peut survenir de manière imprévue. Or, ce bourrage engendre un arrêt de la machine qui peut durer plusieurs dizaines de minutes, impactant directement le temps de récolte et le rendement. Les tiges qui doivent être retirées de ladite zone ne peuvent pas être correctement étalées au sol pour une phase ultérieure de ramassage et/ou de retournage. Par ailleurs, ce bourrage, s'il s'avère répété, peut abîmer les éléments mécaniques (courroies notamment), ce qui engendre un surcoût de maintenance pour réparer ou remplacer les pièces.

DE 197 44 988 décrit une machine d'arrachage et de battage du lin pour la récolte des graines et le retrait des panicules.

FR 2 653 967 décrit une machine d'arrachage qui comporte des moyens de convoyage et des moyens d'étalage.

Un but de la présente invention est donc de résoudre les problèmes cités précédemment.

Ainsi, la présente invention a pour objet un engin agricole automoteur pour récolter par arrachage des plantes à tiges fibreuses, en particulier des plants de lin, comportant au moins :
- un châssis monté sur roues,
- une cabine de pilotage,
- un moteur, et, selon le sens de déplacement de la machine en utilisation dans un champ,
- des moyens d'arrachage à courroies pour arracher par pincement les tiges des plantes à mesure que la machine agricole avance dans le champ,
- des moyens de convoyage à courroies pour transporter les tiges des plantes arrachées et les faire passer d'une position sensiblement verticale d'arrachage à une position sensiblement horizontale de transport par pivotement d'environ 90°, lesdits moyens de convoyage étant inclinés vers le haut et supportant les moyens d'arrachage,
- des moyens d'étalage comportant des courroies et une table d'étalage pour déposer les tiges des plantes sur le sol derrière l'engin agricole, une zone de reprise formant un vide étant définie entre la fin des moyens de convoyage et le début des moyens d'étalage,
caractérisé en ce qu'il comporte en outre des moyens intermédiaires de transport situés au moins en partie dans la zone de reprise afin d'accompagner les tiges des plantes après leur pivotement des moyens de convoyage vers les moyens d'étalage.

Selon des modes de réalisation préférés, l'engin conforme à la présente invention comprend l'une au moins des caractéristiques suivantes :
- les moyens intermédiaires de transport sont constitués par un allongement des courroies des moyens de convoyage dans ladite zone de reprise, en direction des moyens d'étalage ;
- les moyens intermédiaires de transport comportent des poulies supplémentaires dont certaines sont situées au plus près des moyens d'étalage, en particulier à proximité immédiate de la table d'étalage, et les courroies forment, sur lesdites poulies, un coude incliné vers le bas en direction de ladite table ;

- les moyens intermédiaires de transport sont constitués par au moins une courroie secondaire de liaison ;
- la courroie secondaire de liaison est disposée entre les courroies des moyens de convoyage ;
- la courroie secondaire de liaison est disposée sur le côté d'une des courroies des moyens de convoyage ;
- la courroie secondaire de liaison est munie de picots extérieurs et tourne dans le même sens que les moyens d'étalage autour de poulies ;
- les moyens intermédiaire de transport comportent deux courroies secondaires de liaison montées en parallèles entre ou de part et d'autres des courroies des moyens de convoyage ;
- les moyens de convoyage et les moyens d'étalage forment un ensemble monobloc, de sorte que la zone de reprise est de dimension constante quelle que soit la hauteur des moyens d'arrachage par rapport au sol ;
- l'ensemble monobloc est monté pivotant autour d'un axe transversal solidaire du châssis et disposé à l'arrière de l'engin agricole pour pouvoir faire varier la hauteur d'arrachage des moyens d'arrachage par rapport au sol ; et
- au moins un vérin relie le châssis à l'ensemble monobloc pour relever ou abaisser les moyens d'arrachage et faire varier l'angle de pivotement maximal de l'ensemble monobloc d'environ 5 à 15° degrés entre la position la plus abaissée et la position la plus relevée.

L'invention va maintenant être décrite plus en détail en référence à des modes de réalisation particuliers donnés à titre d'illustration uniquement et représentés sur les figures annexées dans lesquelles :
- La figure 1 est une vue de côté d'un engin agricole conforme à la présente invention dans une première position ;
- La figure 2 est une vue de côté d'un engin agricole conforme à la présente invention dans une seconde position ;
- La figure 3 est une vue schématique de côté semblable à la figure 1, avec un engin agricole pourvu d'un châssis monobloc ;
- La figure 4 est une vue schématique de côté semblable à la figure 3, avec un engin agricole pourvu d'un châssis classique en deux parties indépendantes ;
- La figure 5 est une vue de côté d'une variante de réalisation de la figure 3 ;
- La figure 6 est une vue de dessus d'un détail de la figure 5 ; et
- La figure 7 est une vue de face de moyens d'arrachage et de moyens de convoyage de l'engin agricole.

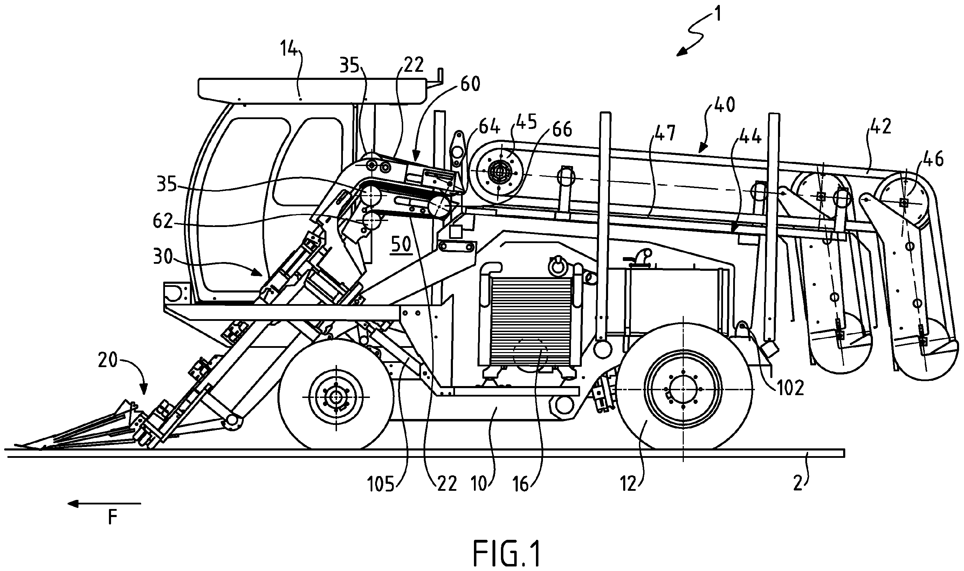

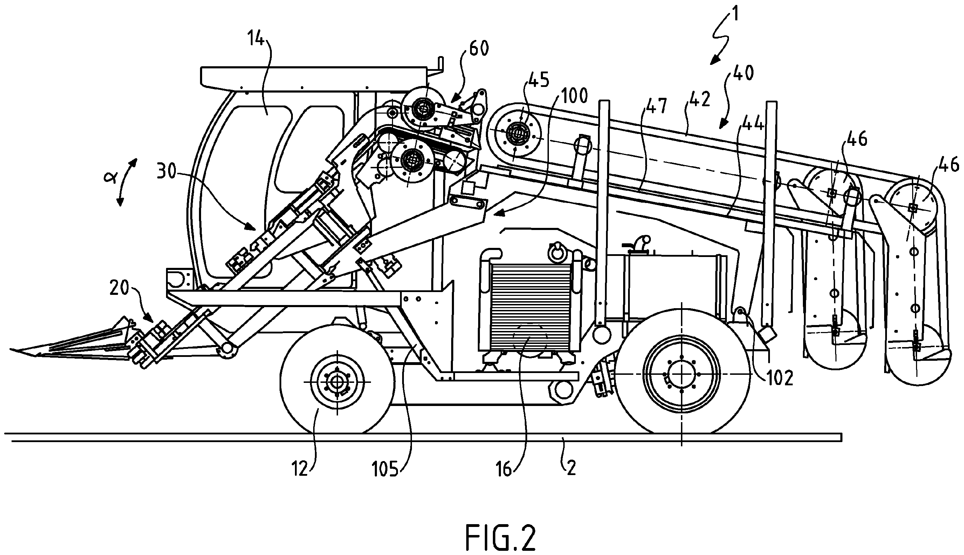

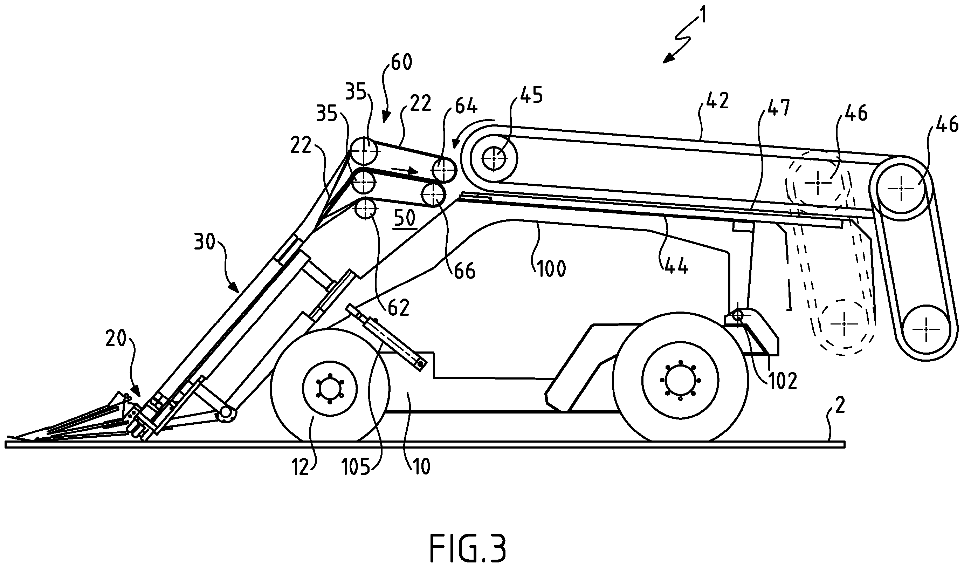

Comme cela est visible sur les figures 1 à 5, la présente invention se rapporte à un engin agricole porteur automoteur 1 conçu pour récolter par arrachage des plantes à tiges fibreuses, en particulier du lin planté verticalement dans un champ 2.

Cet engin agricole 1 comporte globalement un châssis 10, des roues 12, une cabine de pilotage 14 et un moteur 16.

Selon la direction de déplacement F de l'engin agricole en fonctionnement dans le champ 2 à récolter, le véhicule 1 comporte également des moyens d'arrachage 20, des moyens de convoyage 30, et des moyens 40 d'étalage des andains au sol, tous ces moyens étant de type connu.

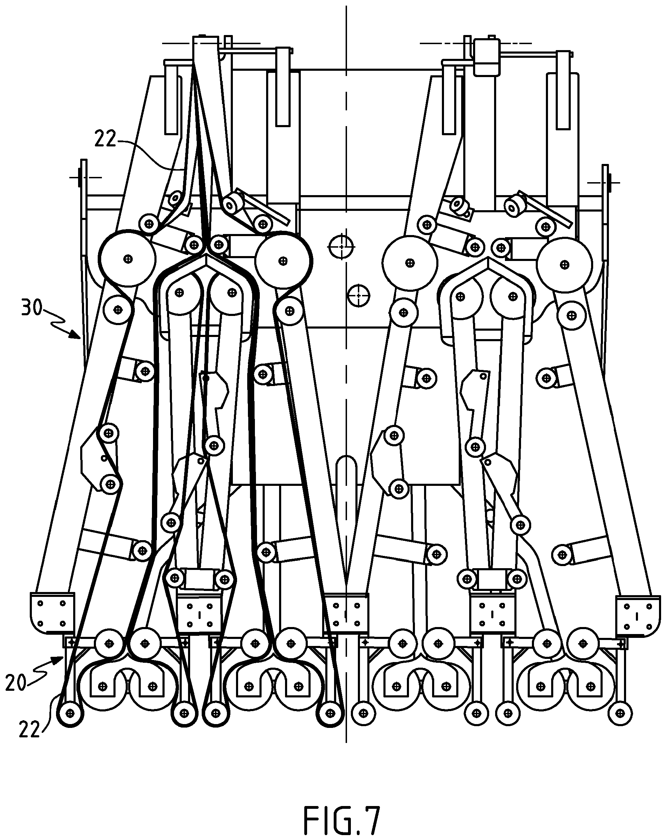

Plus précisément, comme cela est représenté sur la figure 7, les moyens d'arrachage 20, de type double dans le cas présent, comportent des courroies 22 et récoltent les tiges des plantes (qui sont plantées en position verticale dans la terre) par pincement entre lesdites courroies.

Les moyens de convoyage 30, qui prolongent les moyens d'arrachage 20, sont inclinés vers le haut et comportent/supportent lesdites courroies 22 qui permettent de transporter les plantes arrachées vers le haut tout en faisant passer rapidement leurs tiges d'une position sensiblement verticale d'arrachage à une position sensiblement horizontale de transport par pivotement d'environ 90°, et ce grâce à des éléments tels que des tiges ou des carters de guidage (non référencés).

Enfin, les moyens d'étalage 40, également double dans le cas présent, comportent des courroies 42 à picots 43 qui s'étendent vers l'arrière de l'engin agricole 1, au-dessus d'une table d'étalage 44. Ces courroies 42 sont tendues entre des poulies avant 45 et arrière 46. Une zone de vide 47, définie entre le dessous des courroies 42 et le dessus de la table d'étalage 44, est prévue pour le passage des tiges récoltées vers l'arrière de l'engin agricole 1.

Une zone de reprise 50 formant un vide est également définie entre la fin des moyens de convoyage 30, plus précisément au niveau d'une poulie haute 35, et le début des moyens d'étalage 40, plus précisément au niveau de la poulie avant 45.

Habituellement, dans les solutions de l'art antérieur, cette zone de reprise 50, pouvant mesurer plusieurs centimètres à quelques dizaines de centimètres de longueur (selon la direction F), reste entièrement vide de sorte que les andains retournés issus des moyens de convoyage 30 et circulant à grande vitesse peuvent s'amalgamer et provoquer un bourrage engendrant l'arrêt de la machine et donc de la récolte. Or, ceci est particulièrement dommageable et nuit notablement au rendement.

Dans la présente invention, l'engin agricole 1 comporte en outre des moyens intermédiaires de transport 60 situés au moins dans la zone de reprise 50 afin d'accompagner les tiges des plantes après leur pivotement des moyens de convoyage 30 vers les moyens d'étalage 40.

Comme cela est visible sur les figures 1 à 4, les moyens intermédiaires de transport 60 sont constitués par un allongement des courroies 22 des moyens de convoyage 30 dans ladite zone de reprise 50, en direction des moyens d'étalage 40.

Plus précisément, des poulies 62, 64 et 66 sont prévues au début et à la fin de la zone de reprise 50 pour supporter les courroies 22 prolongées. Cette solution permet d'amener les andains après leur pivotement à 90°, pressés entre les poulies 22, au plus proche des moyens d'étalage 40, et en particulier à proximité immédiate de la table d'étalage 44. Les courroies 22 forment, sur lesdites poulies, dans la zone de reprise 50, un coude incliné vers le bas en direction de la table d'étalage 44, ou sensiblement horizontal, pour faciliter encore plus cette amenée des andains vers la poulie avant 45.

Comme cela ressort notamment des figures 1, 2 et 3, les moyens de convoyage 30 et les moyens d'étalage 40 forment un ensemble monobloc 100, de sorte que la zone de reprise 50 est de dimension constante quel que soit la hauteur des moyens d'arrachage 20 par rapport au sol.

Plus précisément, l'ensemble monobloc 100 est monté pivotant autour d'un axe transversal 102 solidaire du châssis 10 et disposé à l'arrière de l'engin agricole 1 pour pouvoir faire varier la hauteur d'arrachage des moyens d'arrachage 20 par rapport au sol, toujours sans modification de la zone de reprise 50 dans laquelle se trouve les moyens intermédiaires de transport 60.

A cet effet, au moins un vérin 105 relie le châssis 10 à l'ensemble monobloc 100 pour relever ou abaisser les moyens d'arrachage 20 et faire varier l'angle α de pivotement maximal de l'ensemble monobloc 100 d'environ 5 à 15° degrés entre la position la plus abaissée et la position la plus relevée.

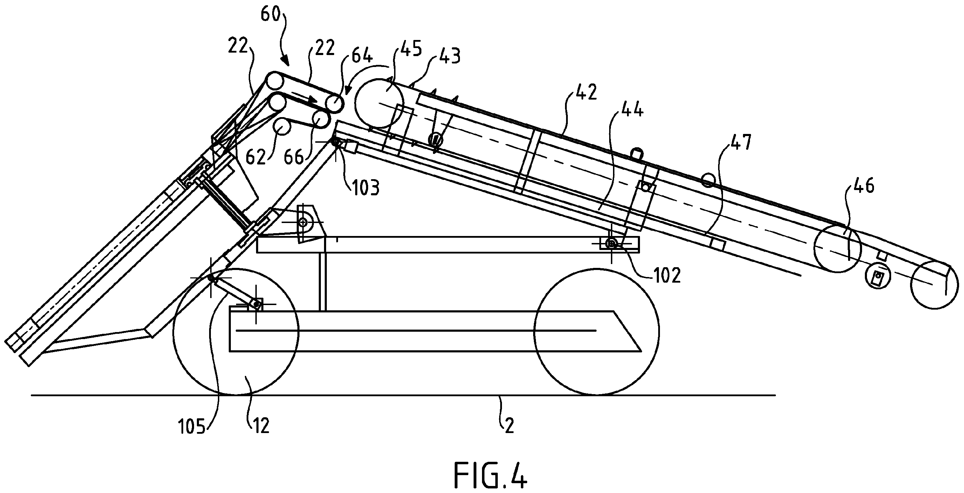

La figure 4 représente une variante de réalisation dans laquelle les moyens de convoyage 30 sont indépendants des moyens d'étalage 100 sur lesquels ils s'articulent par l'intermédiaire d'un second axe transversal 103. Ainsi, quand les moyens de convoyage 30 sont soulevés par le vérin 105 afin de remonter les moyens d'arrachage 20 par rapport au sol, ils pivotent autour du second axe transversal 103, tout en reculant par glissement. En même temps, les moyen d'étalage 40 pivotent indépendamment autour de l'axe transversal 102 pour se relever. Cela a également pour effet de rapprocher légèrement les moyens intermédiaires de transport 60 des moyens d'étalage 40, et en particulier de la poulie avant 45 et de la table d'étalage 44.

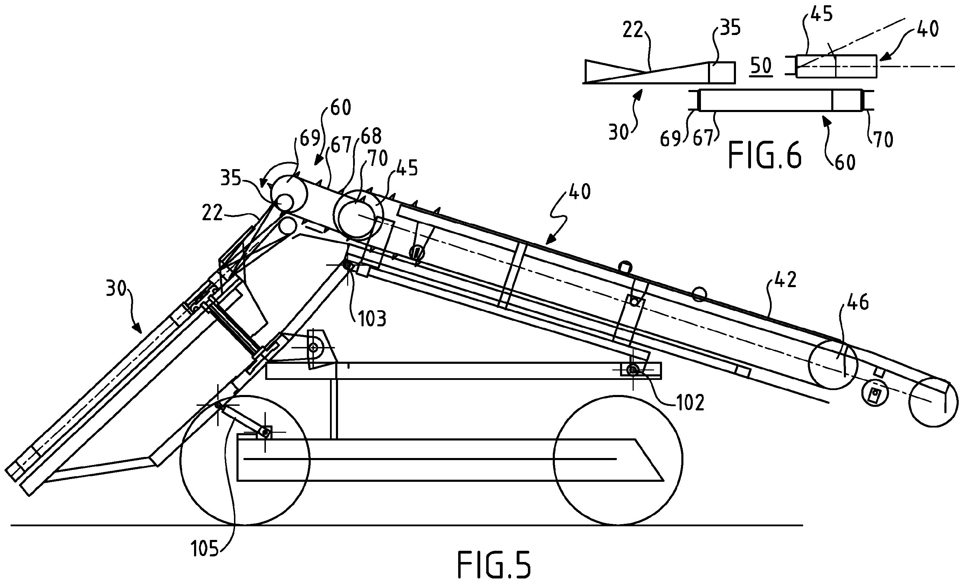

Les figures 5 et 6 montrent une autre variante de réalisation de la figure 4 dans laquelle les moyens intermédiaires de transport 60 sont constitués par au moins une courroie secondaire de liaison 67 disposée par exemple sur le côté des moyens de convoyage 30 et des moyens d'étalage 40, plus précisément sur le côté de la poulie haute 35 des moyens de convoyage 30 et de la poulie avant 45 des moyens d'étalage 40. Chaque courroie secondaire de liaison 67 est tendue sur une poulie avant 69, située proche de la poulie haute 35 des moyens de convoyage 30, et sur une poulie arrière 70 située proche de la poulie avant 45 des moyens d'étalage 40.

Selon une variante non illustrée, la courroie secondaire de liaison 67 est disposée entre des courroies 35 et 45 appartenant respectivement à deux moyens de convoyage 30 et d'étalage 40 montés en parallèle (cas de la ramasseuse double).

Selon un autre mode de réalisation non représenté, deux courroies secondaires de liaison 67 sont montées en parallèles, entre ou de part et d'autres respectivement des courroies 35 des moyens de convoyage 30 et des courroies 45 des moyens d'étalage 40.

Chaque courroie secondaire de liaison 67 est munie de picots extérieurs 68 et tourne dans le même sens que les courroies 42 des moyens d'étalage 40.

Ainsi, quelles que soient les solutions choisies pour les moyens de convoyage 30 et d'étalage 40 (monobloc ou indépendants) et pour les moyens intermédiaires de transport 60 (prolongement des courroies de convoyage 22 ou ajout de courroie(s) secondaire(s) indépendante(s) 67), la zone de reprise 50 est toujours occupée par lesdits moyens intermédiaires de transport 60 qui peuvent alors fonctionner de manière optimisée afin d'amener les tiges des plantes au plus près des moyens d'étalage 40, sans risque de bourrage.

Cette optimisation permet de réduire de manière importante les temps d'arrêt de la machine pour bourrage, ainsi que le remplacement de certaines pièces usées prématurément à cause notamment de ce phénomène de bourrage, ce qui améliore notablement la cadence de la récolte et donc le rendement.

Il va de soi que la description détaillée de l'objet de l'invention, donnée uniquement à titre d'illustration n'est limité que par le libellé des revendications.

## Revendications

1. Engin agricole automoteur (1) pour récolter par arrachage des plantes à tiges fibreuses, en particulier des plants de lin, comportant au moins :
- un châssis (10) monté sur roues (12),
- une cabine de pilotage (14),
- un moteur (16), et, selon le sens de déplacement (F) de la machine en utilisation dans un champ,
- des moyens d'arrachage (20) à courroies (22) pour arracher par pincement les tiges des plantes à mesure que la machine agricole (1) avance dans le champ,
- des moyens de convoyage (30) à courroies (22) pour transporter les tiges des plantes arrachées et les faire passer d'une position verticale d'arrachage à une position horizontale de transport par pivotement à 90°, lesdits moyens de convoyage (30) étant inclinés vers le haut et supportant les moyens d'arrachage (20),
- des moyens d'étalage (40) comportant des courroies (42) et une table d'étalage (44) pour déposer les tiges des plantes sur le sol derrière l'engin agricole (1), une zone de reprise (50) formant un vide étant définie entre la fin des moyens de convoyage (30) et le début des moyens d'étalage (40), et
en outre, des moyens intermédiaires de transport (60) situés au moins en partie dans la zone de reprise (50) afin d'accompagner les tiges des plantes après leur pivotement des moyens de convoyage (30) vers les moyens d'étalage (40),
**caractérisé en ce que**
- les moyens de convoyage (30) et les moyens d'étalage (40) forment un ensemble monobloc (100), de sorte que la zone de reprise (50) est de dimension constante quelle que soit la hauteur des moyens d'arrachage (20) par rapport au sol.

2. Engin agricole (1) selon la revendication 1, **caractérisé en ce que** les moyens intermédiaires de transport (60) sont constitués par un allongement des courroies (22) des moyens de convoyage (30) dans ladite zone de reprise (50), en direction des moyens d'étalage (40).

3. Engin agricole (1) selon la revendication 2, **caractérisé en ce que** les moyens intermédiaires de transport (60) comportent des poulies supplémentaires (62, 64, 66) dont certaines (64, 66) sont situées au plus près des moyens d'étalage (40), en particulier à proximité immédiate de la table d'étalage (44), et les courroies forment (22), sur lesdites poulies (62, 64, 66), un coude incliné vers le bas en direction de ladite table (44).

4. Engin agricole (1) selon la revendication 1, **caractérisé en ce que** les moyens intermédiaires de transport (60) sont constitués par au moins une courroie secondaire de liaison (67).

5. Engin agricole (1) selon la revendication 4, **caractérisé en ce que** la courroie secondaire de liaison (67) est disposée entre les courroies (22) des moyens de convoyage (30).

6. Engin agricole (1) selon la revendication 4, **caractérisé en ce que** la courroie secondaire de liaison (67) est disposée sur le côté d'une des courroies (22) des moyens de convoyage (30).

7. Engin agricole (1) selon l'une quelconque des revendications 4 à 6, **caractérisé en ce que** la courroie secondaire de liaison (67) est munie de picots extérieurs (68) et tourne dans le même sens que les moyens d'étalage (40) autour de poulies (69, 70).

8. Engin agricole (1) selon l'une quelconque des revendications 4 ou 7, caractérisé en ce les moyens intermédiaire de transport (60) comportent deux courroies secondaires de liaison (67) montées en parallèles entre ou de part et d'autres des courroies (22) des moyens de convoyage (30).

9. Engin agricole (1) selon l'une quelconque des revendications précédentes, **caractérisé en ce que** l'ensemble monobloc (100) est monté pivotant autour d'un axe transversal (102) solidaire du châssis (10) et disposé à l'arrière de l'engin agricole (1) pour pouvoir faire varier la hauteur d'arrachage des moyens d'arrachage (2) par rapport au sol.

10. Engin agricole (1) selon la revendication 9, **caractérisé en ce qu'**au moins un vérin (105) relie le châssis (10) à l'ensemble monobloc (100) pour relever ou abaisser les moyens d'arrachage (20) et faire varier l'angle de pivotement maximal (α) de l'ensemble monobloc de 5 à 15° degrés entre la position la plus abaissée et la position la plus relevée.

## Patentansprüche

1. Selbstfahrende landwirtschaftliche Maschine (1) zum Ernten durch Ausreißen von Pflanzen mit faserigen Halmen, insbesondere von Leinpflanzen, wenigstens Folgendes umfassend:
- ein auf Rädern (12) montiertes Fahrwerk (10),
- eine Steuerkabine (14),
- einen Motor (16) und, je nach Bewegungsrichtung (F) der Maschine bei Verwendung in einem Feld,
- Ausreißmittel (20) mit Riemen (22) zum Ausreißen durch Einklemmen der Pflanzenhalme in dem Maße, in dem die landwirtschaftliche Maschine (1) sich auf dem Feld fortbewegt,
- Förderungsmittel (30) mit Riemen (22), um die Halme der ausgerissenen Pflanzen zu transportieren und um sie in von einer vertikalen Ausreißposition in eine horizontale Transportposition zu befördern durch Schwenkung um 90°, wobei die Förderungsmittel (30) nach oben geneigt sind und die Ausreißmittel (20) stützen,
- Auslegemittel (40), umfassend Riemen (42) und einen Auslegetisch (44), um die Pflanzenhalme auf den Boden hinter der landwirtschaftlichen Maschine (1) zu legen, einen Wiederaufnahmebereich (50), einen Hohlraum bildend, welcher zwischen dem Ende der Förderungsmittel (30) und dem Anfang der Auslegemittel (40) definiert ist, und
weiter intermediäre Transportmittel (60), mindestens teilweise positioniert in dem Wiederaufnahmebereich (50), um die Pflanzenhalme nach ihrer Schwenkung von den Förderungsmitteln (30) zu den Auslegemitteln (40) zu begleiten,
**dadurch gekennzeichnet, dass**
- die Förderungsmittel (30) und die Auslegemittel (40) eine einteilige Einheit (100) bilden, solcherart, dass der Wiederaufnahmebereich (50) von konstanter Dimension ist, unabhängig von der Höhe der Ausreißmittel (20) im Verhältnis zum Boden.

2. Landwirtschaftliche Maschine (1) nach Anspruch 1, **dadurch gekennzeichnet, dass** die intermediären Transportmittel (60) konstituiert sind durch eine Verlängerung der Riemen (22) der Förderungsmittel (30) in dem Wiederaufnahmebereich (50) in Richtung der Auslegemittel (40).

3. Landwirtschaftliche Maschine (1) nach Anspruch 2, **dadurch gekennzeichnet, dass** die intermediären Transportmittel (60) zusätzliche Umlenkrollen (62, 64, 66) umfassen, von denen einige (64, 66) möglichst nahe bei den Auslegemitteln (40) liegen, insbesondere in direkter Nähe zu dem Auslegetisch (44), und die Riemen (22) auf den Umlenkrollen (62, 64, 66) einen nach unten in Richtung des Tisches (44) geneigten Bogen ausbilden.

4. Landwirtschaftliche Maschine (1) nach Anspruch 1, **dadurch gekennzeichnet, dass** die intermediären Transportmittel (60) aus wenigstens einen sekundären Verbindungs-Riemen (67) konstituiert sind.

5. Landwirtschaftliche Maschine (1) nach Anspruch 4, **dadurch gekennzeichnet, dass** die sekundäre Verbindungs-Riemen (67) zwischen den Riemen (22) der Förderungsmittel (30) angeordnet ist.

6. Landwirtschaftliche Maschine (1) nach Anspruch 4, **dadurch gekennzeichnet, dass** den sekundären Verbindungs-Riemen (67) auf der Seite eines der Riemen (22) der Förderungsmittel (30) angeordnet ist.

7. Landwirtschaftliche Maschine (1) nach einem der Ansprüche 4 bis 6, **dadurch gekennzeichnet, dass** der sekundäre Verbindungs-Riemen (67) mit externen Stacheln (68) ausgestattet ist und sich in der gleichen Richtung wie die Auslegemittel (40) um die Umlenkrollen (69, 70) dreht.

8. Landwirtschaftliche Maschine (1) nach einem der Ansprüche 4 oder 7, **dadurch gekennzeichnet, dass** die intermediären Transportmittel (60) zwei sekundäre Verbindungs-Riemen (67) umfassen, parallel montiert zwischen den oder beidseitig der Riemen (22) der Förderungsmittel (30).

9. Landwirtschaftliche Maschine (1) nach einem der vorhergehenden Ansprüche, **dadurch gekennzeichnet, dass** die einteilige Einheit (100) schwenkbar um eine mit dem Fahrwerk (10) fest verbundene und auf der Rückseite der landwirtschaftlichen Maschine (1) angeordnete Querachse (102) montiert ist, um die Ausreißhöhe der Ausreißmittel (2) im Verhältnis zum Boden variieren zu können.

10. Landwirtschaftliche Maschine (1) nach Anspruch 9, **dadurch gekennzeichnet, dass** wenigstens ein Stellglied (105) das Fahrwerk (10) mit der einteiligen Einheit (100) verbindet, um die Ausreißmittel (20) anzuheben oder abzusenken und den maximalen Schwenkwinkel (α) der einteiligen Einheit von 5 bis 15° Grad zwischen der abgesenktesten Position und der angehobensten Position variieren zu lassen.

## Claims

1. A self-propelled agricultural machine (1) for harvesting by uprooting plants with fibrous stems, in particular flax plants, including at least:
- a chassis (10) mounted on wheels (12),
- a control cabin (14),
- an engine (16), and, according to the direction of advance (F) of the machine when used in a field,
- uprooting means (20) with belts (22) for uprooting by pinching the stems of the plants as the agricultural machine (1) advances in the field,
- conveying means (30) with belts (22) for transporting the stems of the uprooted plants and making them switch from a vertical uprooting position to a horizontal transport position by pivoting by 90°, said conveying means (30) being inclined upwards and supporting the uprooting means (20),
- spreading means (40) including belts (42) and a spreading table (44) for laying the stems of the plants on the ground behind the agricultural machine (1), a recovery area (50) forming a void being defined between the end of the conveying means (30) and the beginning of the spreading means (40), and
furthermore, intermediate transport means (60) located at least partially in the recovery area (50) in order to accompany the stems of the plants after pivoting thereof from the conveying means (30) towards the spreading means (40), **characterised in that**
- the conveying means (30) and the spreading means (40) form an one-piece set (100), so that the recovery area (50) has a constant dimension regardless of the height of the uprooting means (20) with respect to the ground.

2. The agricultural machine (1) according to claim 1, **characterised in that** the intermediate transport means (60) consist of an extension of the belts (22) from the conveying means (30) in said recovery area (50), in the direction of the spreading means (40).

3. The agricultural machine (1) according to claim 2, **characterised in that** the intermediate transport means (60) include additional pulleys (62, 64, 66) some (64, 66) of which are located the closest to the spreading means (40), in particular in the immediate vicinity of the spreading table (44), and the belts form (22), on said pulleys (62, 64, 66), an elbow inclined downwards in the direction of said table (44).

4. The agricultural machine (1) according to claim 1, **characterised in that** the intermediate transport means (60) consist of at least one secondary link belt (67) .

5. The agricultural machine (1) according to claim 4, **characterised in that** the secondary link belt (67) is disposed between the belts (22) of the conveying means (30).

6. The agricultural machine (1) according to claim 4, **characterised in that** the secondary link belt (67) is disposed on the side of one of the belts (22) of the conveying means (30).

7. The agricultural machine (1) according to any one of claims 4 to 6, **characterised in that** the secondary link belt (67) is provided with external spikes (68) and rotates in the same direction as the spreading means (40) around the pulleys (69, 70).

8. The agricultural machine (1) according to any one of claims 4 or 7, **characterised in that** the intermediate transport means (60) include two secondary link belts (67) mounted in parallel between or on either side of the belts (22) of the conveying means (30) .

9. The agricultural machine (1) according to any one of the preceding claims, **characterised in that** the one-piece set (100) is pivotally mounted about a transverse axis (102) integral with the chassis (10) and disposed at the back of the agricultural machine (1) so as to be able to vary the uprooting height of the uprooting means (2) with respect to the ground.

10. The agricultural machine (1) according to claim 9, **characterised in that** at least one cylinder (105) links the chassis (10) to the one-piece set (100) to raise or lower the uprooting means (20) and vary the maximum pivot angle (α) of the one-piece set from 5 to 15° degrees between the lowermost position and the uppermost position.
